(19) Europäisches Patentamt / European Patent Office / Office européen des brevets

(11) **EP 2 662 706 B1**

(12) **EUROPEAN PATENT SPECIFICATION**

(45) Date of publication and mention
of the grant of the patent:
**02.09.2015 Bulletin 2015/36**

(51) Int Cl.:
**G01S 19/21** [(2010.01)]

(21) Application number: **13166912.9**

(22) Date of filing: **07.05.2013**

(54) **Interfering signal detection device for a global navigation satellite system**

Störsignalerkennungsvorrichtung für ein globales satellitengestütztes Navigationssystem

Dispositif de détection de signal d'interférence pour système mondial de navigation par satellite

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **07.05.2012 IT TO20120408**

(43) Date of publication of application:
**13.11.2013 Bulletin 2013/46**

(73) Proprietor: **SELEX ES S.p.A.**
**Roma (IT)**

(72) Inventors:
• **Linty, Nicola Umberto**
**00195 Roma (IT)**
• **Falletti, Emanuela**
**00195 Roma (IT)**
• **Parizzi, Francesco**
**00195 Roma (IT)**
• **Fantino, Maurizio**
**00195 Roma (IT)**
• **Torchi, Augusto**
**00195 Roma (IT)**

(74) Representative: **Boggio, Luigi et al**
**Studio Torta S.p.A.**
**Via Viotti, 9**
**10121 Torino (IT)**

(56) References cited:
• **BASTIDE F ET AL: "GPS Interference Detection
and Identification Using Multicorrelator
Receivers", PROCEEDINGS OF THE INSTITUTE
OF NAVIGATION (ION) GPS, XX, XX, 11
September 2001 (2001-09-11), pages 872-881,
XP007901538,**
• **WEI SUN ET AL: "Maximum Signal-to-Noise Ratio
GPS Anti-Jam Receiver with Subspace
Tracking", 2005 IEEE INTERNATIONAL
CONFERENCE ON ACOUSTICS, SPEECH, AND
SIGNAL PROCESSING - 18-23 MARCH 2005 -
PHILADELPHIA, PA, USA, IEEE, PISCATAWAY,
NJ, vol. 4, 18 March 2005 (2005-03-18), pages
1085-1088, XP010792807, ISBN:
978-0-7803-8874-1**
• **ZHAO HONGWEI ET AL: "Interference
suppression in GNSS receiver using space-time
adaptive processing", COMMUNICATION
SOFTWARE AND NETWORKS (ICCSN), 2011
IEEE 3RD INTERNATIONAL CONFERENCE ON,
IEEE, 27 May 2011 (2011-05-27), pages 381-385,
XP032049714, DOI: 10.1109/ICCSN.2011.6013617
ISBN: 978-1-61284-485-5**
• **WANG R ET AL: "Interference cancellation in GPS
receiver using noise subspace tracking
algorithm", SIGNAL PROCESSING, ELSEVIER
SCIENCE PUBLISHERS B.V. AMSTERDAM, NL,
vol. 91, no. 2, 1 February 2011 (2011-02-01), pages
338-343, XP027229522, ISSN: 0165-1684
[retrieved on 2010-07-15]**

EP 2 662 706 B1

## Description

The present invention relates to an interfering signal detection device for a global navigation satellite system. In particular, the present invention regards a detection device for a sinusoidal type of interfering signal.

As is known, different global navigation satellite systems (GNSS) are available today, such as the so-called Global Positioning System (GPS) and the Galileo system for example.

In general, a global navigation satellite system comprises a plurality of satellites, which provide data to electronic receivers, available to users, to enable the receivers to determine their positions on the earth's surface.

More in detail, the term "navigation signals" is used to indicate the electromagnetic signals transmitted by the satellites and containing data that can be processed by the receivers to determine their respective positions, the data transmitted by each satellite being modulated with a sinusoidal carrier and a respective code, known as pseudo-random noise (PRN). In particular, modulation takes place on the basis of so-called spread spectrum techniques and periodical signals obtained by repeating the PRN codes in a periodic manner.

In general, assuming reference is made to a specific band used by a specific global navigation satellite system (for example, the so-called L1 band of the GPS system), the codes to be associated with the satellites are selected from a code family, which includes a finite number of codes. The codes of the family have some common properties; for example, all the codes of the family have a same duration and are formed by a same number of so-called chips.

The receivers know the code family, but when a receiver receives a certain navigation signal coming from a certain satellite, and therefore modulated with a certain PRN code, it does not know beforehand the PRN code associated with the given satellite. Thus, during the so-called acquisition step, the receiver determines the given PRN code by trial, searching for it in the code family. Once the PRN code associated with the given satellite is determined, the receiver can correctly demodulate the data sent by the given satellite.

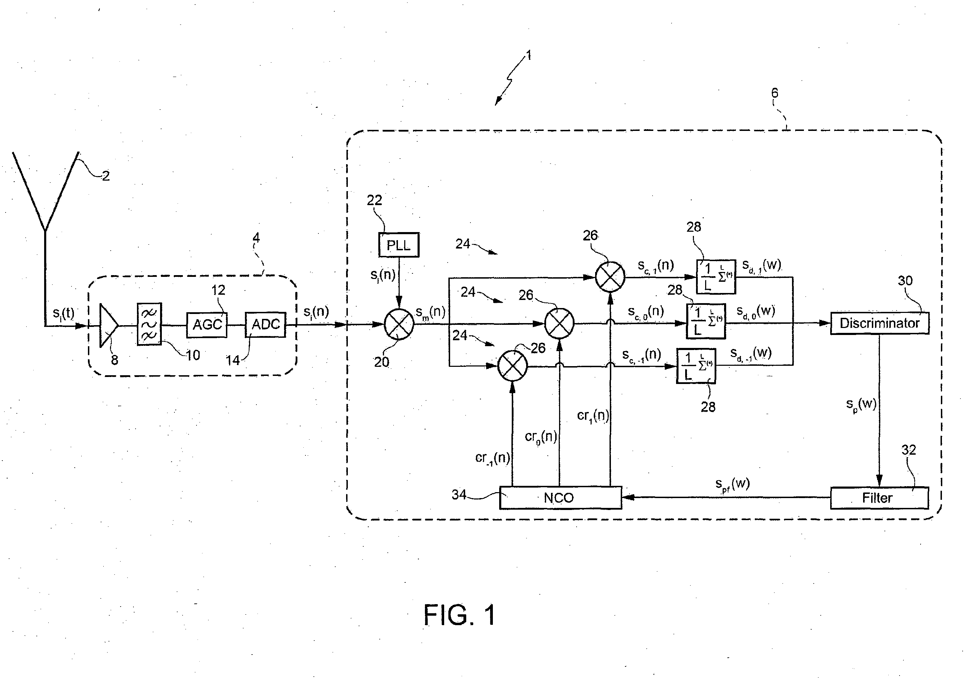

An example of a receiver is shown in Figure 1. In particular, Figure 1 shows a receiver 1 that comprises an antenna 2, an input stage 4 and a digital signal processing stage 6, which will hereinafter be referred to as the tracking stage 6.

The antenna 2 is able to receive navigation signals and is connected to the input stage 4, which is formed by an input amplifier 8, a bandpass filter 10, an automatic gain control amplifier 12 and an analog-to-digital (A/D) converter 14. The input amplifier 8, bandpass filter 10, automatic gain control amplifier 12 and A/D converter 14 are arranged in cascade and are electrically connected to each other. Thus, using the term "input signal" $s_i(t)$ to indicate the electrical signal generated by the antenna 2 as a function of one or more navigation signals (if present) and supplied to the input amplifier 8, the A/D converter 14 supplies a sampled signal $s_i(n)$, as output from the input stage 4. In particular, the A/D converter 14 operates at a sampling frequency $f_s$.

Other electronic components may be present inside the input stage 4. Furthermore, the input stage 4 is such that the spectrum of the sampled signal $s_i(n)$ is a replica centred on a so-called intermediate frequency of the spectrum of the input signal $s_i(t)$.

The tracking stage 6 comprises an input multiplier 20 and a digital phase locked loop 22. The input multiplier 20 has a first and a second input, which are respectively connected to the A/D converter 14 and an output of the digital phase locked loop 22.

The tracking stage 6 further comprises a number N of correlation branches 24, where N is odd; in particular, only three correlation branches 24 are shown in Figure 1 for simplicity of illustration, although the number N of correlation branches 24 may be higher. The set of correlation branches 24 defines a so-called correlation channel.

Each correlation branch 24 comprises a correlation multiplier 26 and an accumulator 28. In particular, the correlation multiplier 26 has a first and a second input, the first input being connected to the output of the input multiplier 20; furthermore, the correlation multiplier 26 has an output, which is connected to an input of the corresponding accumulator 28.

In greater detail, the input stage 6 further comprises a discriminator 30, a discrimination filter 32 and a digitally controlled oscillator 34.

Each accumulator 28 has a respective output, which is connected to an input of the discriminator 30. In addition, the discriminator 30 has an output, which is connected to an input of the discrimination filter 32, the output of which is connected to an input of the digitally controlled oscillator 34. In turn, the digitally controlled oscillator 34 has a number of outputs equal to the number of correlation branches 24. Each output of the digitally controlled oscillator 34 is connected to the second input of a corresponding correlation multiplier 26.

Operationally, assuming that the antenna 2 receives a first navigation signal, modulated with a first code PRN1 and having a carrier at a first frequency $f_{c1}$, the digital phase locked loop 22 supplies a local signal $s_l(n)$, of digital type, on the second input of the input multiplier 20. In particular, the local signal $s_l(n)$ is formed by a plurality of samples, which can be complex. In addition, the local signal $s_l(n)$ has a frequency substantially equal to the above-mentioned intermediate frequency, although in such conditions it is generally said that the local signal $s_l(n)$ is locked to the carrier of the first navigation signal, which, as said, has a frequency equal to the first frequency $f_{c1}$. Although not shown in Figure 1, in order to generate the local signal $s_l(n)$, the digital phase locked loop 22 comprises its own discriminator, filter and digitally controlled oscillator, connected in sequence, the input of the discriminator being connected to the outputs of the accumulators 28.

In turn, the input multiplier 20 provides a multiplication signal $s_m(n)$, which is also of digital type.

With regard to the digitally controlled oscillator 34, this provides a corresponding local periodical signal, of digital type, on each of its outputs. Each of the local periodical signals is defined by the periodic repetition of a same analysis code PRNa; in addition, the local periodical signals are mutually time-shifted. The samples of the local periodical signals are provided at the sampling frequency $f_s$.

In detail, one of the N local periodical signals provided by the digitally controlled oscillator 34 defines a kind of time reference; in Figure 1, this local periodical signal is indicated by $cr_0(n)$. That having been said, the local periodical signals differing from the time reference are such that it is possible to define (N-1)/2 pairs of signals and a time lag $\Delta$. In particular, by using an index i=1, ..., (N-1)/2 to individually indicate the pairs of signals, the i-th pair of signals is formed by a first local periodical signal, which is in advance with respect to the time reference $cr_0(n)$ by a time equal to $i*\Delta$, and a second local periodical signal, which is delayed with respect to the time reference $cr_0(n)$ by a time equal to $i*\Delta$. Purely by way of example, Figure 1 only shows one pair of signals, the first and second local periodical signals of which are respectively indicated by $cr_{-1}(n)$ and $cr_1(n)$. In other words, to identify the two local periodical signals of any pair of signals provided by the digitally controlled oscillator, the notation $cry(n)$, with $y=\pm i$, is used.

From another perspective, one of the correlation branches 24 receives the time reference $cr_0(n)$ on the second input of its correlation multiplier 26. This correlation branch 24 defines a prompt correlation branch, while the other correlation branches as subdivided into (N-1)/2 pairs of correlation branches, each pair of correlation branches being formed by a first and a second correlation branch, which receive two different local periodical signals on the second inputs of their correlation multipliers, one signal which is in advance with respect to the time reference $cr_0(n)$ and the other delayed with respect to the time reference $cr_0(n)$, the extents of the advance and the delay being equal.

In even greater detail, the local periodical signals are provided by the digitally controlled oscillator 34 at sampling frequency $f_s$. Furthermore, assuming an index z=-(N-1)/2, -(N-1)/2+1, ..., 0, 1, ..., (N-1)/2 to individually identify the correlation branches 24, and using the term "intermediate signal" $s_{c,z}(n)$ to indicate, given the z-th correlation branch 24, the electrical signal present on the output of the corresponding correlation multiplier 26, the corresponding accumulator 28 is able to sum a number L of samples of the intermediate signal $s_{c,z}(n)$ and divide the result of this sum by the same number L, thereby determining a sample of a corresponding correlation signal $s_{d,z}(w)$. The notation z=y is adopted in Figure 1 for completeness.

In practice, the accumulators 28 function as "integrate and dump" blocks. Furthermore, the samples of the correlation signals $s_{d,z}(w)$ are provided at a frequency equal to $f_s/L$, i.e. the index w can be interpreted as the rounded-down integer value of the ratio n/L. In other words, given any accumulator 28 and given a first and a second sample of a same correlation signal $s_{d,z}(w)$, the first sample is a function of a first set of L samples of the corresponding intermediate signal $s_{c,z}(n)$, while the second sample is a function of a second set of L samples of the this intermediate signal $s_{c,z}(n)$, the samples of the second set being different from the samples of the first set.

The discriminator 30 receives the N correlation signals $s_{d,z}(w)$ in input and provides a digital-type pilot signal $s_p(w)$ on its output, with samples output at a frequency equal to $f_s/L$. The pilot signal $s_p(w)$ is filtered by the discrimination filter 32, which is also of a digital type and low-pass, so as to provide a filtered pilot signal $s_{pf}(w)$. The filtered pilot signal $s_{pf}(w)$ is supplied at input to the digitally controlled oscillator 34.

That having been said, when the receiver 1 operates in so-called tracking mode, i.e. after the so-called acquisition step, the analysis code PRNa is equal to the first code PRN1, this condition being generally known as code lock. Furthermore, the discriminator 30 operates such that the time reference $cr_0(n)$ is temporally aligned with the first navigation signal and, more precisely, with the first code PRN1, modulating the first navigation signal. Even more particularly, it is possible to refer to the first periodic modulation sequence to indicate the periodical signal obtained by periodically repeating the first code PRN1 and used to modulate the first navigation signal; in this case, the time reference $cr_0(n)$ is, in fact, temporally aligned with this first periodic modulation sequence.

The temporal alignment is obtained thanks to the fact that the pilot signal $s_p(w)$ is generated by the discriminator 30, based on the N correlation signals $s_{d,z}(w)$, so as to be a function of the time delay between the time reference $cr_0(n)$ and the first periodic modulation sequence. Therefore, when temporal alignment occurs, a maximization of the samples of the correlation signal $s_{d,0}(w)$ in output from the prompt correlation branch, with respect to the corresponding samples of the correlation signals $s_{d,z}(w)$ (with z non-zero) provided by the other correlation branches 24, also occurs. Furthermore, since the digital phase locked loop 22 follows the phase of the carrier of the first navigation signal, the tracking stage 6 is locked to the first navigation signal, i.e. it locally generates a harmonic signal (local signal $s_l(n)$) at the same frequency as the above-mentioned intermediate frequency, and therefore locked to the carrier of the first navigation signal, as well as a signal (time reference $cr_0(n)$) that is temporally aligned with the first periodic modulation sequence and shares a same code with the latter.

Once the tracking stage 6 is locked, the receiver 1 can demodulate the data contained in the first navigation signal, as well as derive information regarding its distance from the satellite, based on the delay of the first navigation signal with respect to the time reference $cr_0(n)$.

Although not shown in Figure 1, the receiver 1 also includes further tracking stages in order to enable simultaneous reception of navigation signals from different satellites.

That having been said, it is known that interfering signals can be superimposed on the navigation signals.

An interfering signal is a signal that, from the standpoint of a receiver, represents noise, which limits or even prevents the possibility of determining its position with precision. In particular, interfering signals can cause degradation of the so-called signal to noise power density ratio ($C/N_0$) and/or errors in data demodulation. In addition, interfering signals can cause loss of locking by the tracking stage.

The causes of interfering signals are many and they determine the characteristics of the interfering signals. In particular, interference can alternatively be of the intentional or non-intentional type. For example, secondary harmonics or spurious emissions of signals with frequencies close to the frequencies used by satellites can be counted as non-intentional interference. Instead, with regard to intentional interference, so-called jamming techniques are known, which enable the generation of signals capable of preventing receivers from identifying navigation signals, or techniques for generating false navigation signals so that receivers calculate incorrect positions.

Independently of the intentionality, interfering signals can be classified on the basis of their characteristics in the time domain and in the frequency domain. In particular, interfering signals of the so-called continuous wave (CW) type are known, which have relatively narrow bands (less than 100 kHz), as well as wideband interfering signals. Interfering signals of the so-called pulsed type are also known, which are typically called radar signals, as well as interfering signals of the so-called linearly variable frequency type, which, for practical purposes, are continuous-wave type signals with a central frequency that varies with time.

That having been said, most of the interfering signals are of a sinusoidal type, or rather can be modelled, in a first approximation, as a sinusoidal signal. In particular, continuous wave type interfering signals, linearly variable frequency interfering signals and pulsed type interfering signals that, in the time periods of activity, are of the continuous wave type, can be considered comparable to sinusoidal signals.

Numerous devices and methods have been proposed in order to detect the presence of interfering signals. In particular, with reference precisely to sinusoidal type interfering signals, the article entitled "Use of Multicorrelator Techniques for Interference Detection", by C. Macabiau et al., ION NTM 2001, 22-24 January 2011, Long Beach, CA, describes a method for detecting a continuous-wave type interfering signal, based on spectral analysis of the correlation function, as available in a so-called multicorrelator type receiver.

Although the method described in the above-mentioned article effectively enables detecting the presence of a sinusoidal type interfering signal, it assumes that the multicorrelator type receiver is operating in the so-called tracking mode, and therefore assumes, amongst other things, that the multicorrelator type receiver is effectively locked onto a navigation signal, and is therefore locked to the carrier and to the code of this navigation signal. However, it is well known that receivers can operate in different modes with respect to the tracking mode; for example, receivers can operate in acquisition mode, where the method described in the above-mentioned article is not applicable, as there is neither frequency lock nor code lock. In addition, it is possible that the navigation signal has insufficient power to enable correct processing and therefore tracking by the receiver.

The object of the present invention is therefore to provide a detection device for a sinusoidal type of interfering signal that at least partially resolves the drawbacks of the known art.

According to the present invention, a device and a method for detecting an interfering signal are provided, as defined in claims 1 and 11, respectively.

For a better understanding of the invention, some embodiments will now be described, purely by way of non-limitative example and with reference to the attached drawings, where:

- Figure 1 shows a block diagram of a receiver of a global navigation satellite system of known type;
- Figure 2 shows a block diagram of a detection device according to the present invention;
- Figure 3 schematically shows a global navigation satellite system;
- Figure 4 shows a Cartesian graph indicating the points of a correlation function, regarding a given detection period;
- Figure 5 shows an example of a frequency spectrum of a signal obtained by periodic repetition of a pseudo-random code;
- Figure 6 shows a frequency time trend of a signal generated in the detection device shown in Figure 2;
- Figure 7 schematically shows the time distribution of signals generated in the detection device shown in Figure 2; and
- Figure 8 shows trends of a first and a second probability density function of the modulus of the maximum modulus eigenvalue of a matrix calculated by the present detection device, in the absence and in the presence of interfering signals, respectively.

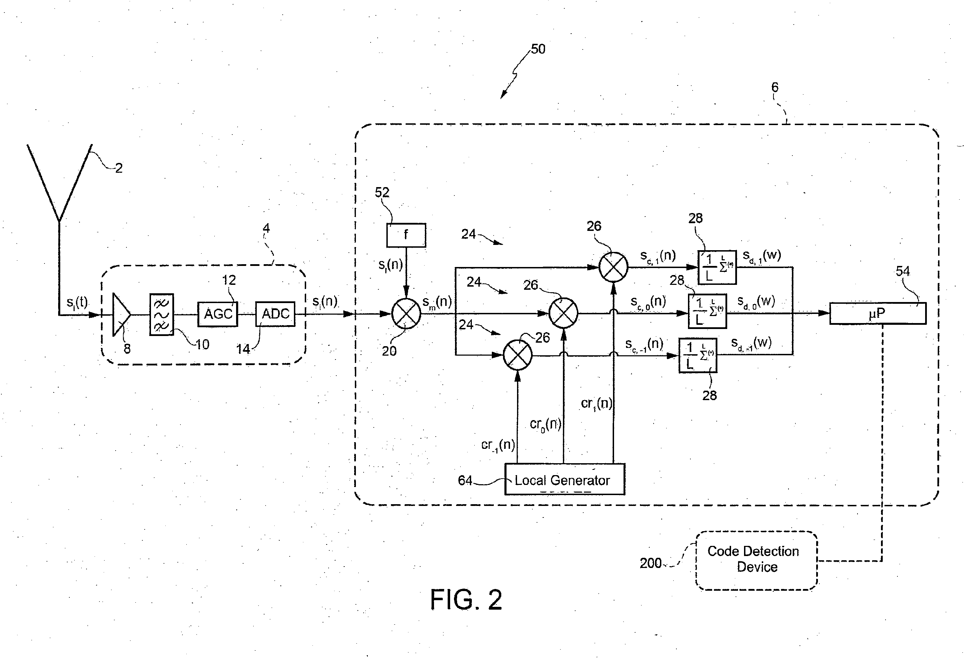

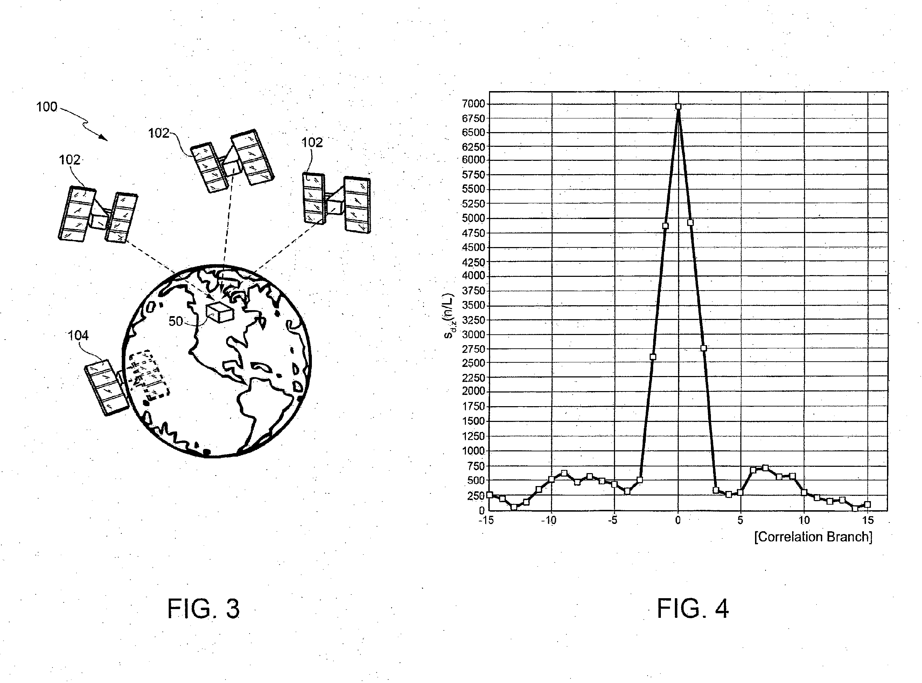

Figure 2 shows a detection device for a sinusoidal type of interfering signal, indicated as a whole by reference numeral 50 and suitable for use in a global navigation satellite system 100 (Figure 3). Hereinafter, for brevity, the present detection device for a sinusoidal type of interfering signal is referred to as the detection device 50. Furthermore, the detection device 50 is described strictly in relation to the differences with respect to the receiver 1 shown in Figure 1. In particular, components and signals already present in the receiver 1 are indicated with the same reference numerals, except where specified otherwise.

In detail, instead of the digital phase locked loop 22, the detection device 50 comprises a variable frequency generator 52, which is such that the local signal $s_l(n)$ is formed by samples of a sinusoidal waveform having a local frequency $f_{sweep}$, which varies with time as described hereinafter.

Instead of the discriminator 30, the detection device 50 further comprises a processing unit 54, which receives the N correlation signals $s_{d,z}(w)$ in input. On this point, hereinafter it is assumed, purely by way of example, that the number N of correlation branches 24 is thirty-one.

In addition, as again shown in Figure 2, the detection device 50 does not comprise the discrimination filter 32. In this way, the digitally controlled oscillator (here indicated by reference numeral 64) operates in open loop mode, as does the variable frequency generator 52 as well. As the digitally controlled oscillator 64 now operates in open loop mode, it will be referred to hereinafter as the local generator 64.

With regard to the global navigation satellite system 100, it is assumed that it is formed by a number S1 of visible satellites 102, each of which is associated with a corresponding PRN code. In particular, a satellite is said to be visible when its navigation signal is received by the detection device 50.

The global navigation satellite system 100 further comprises a number S2 of invisible satellites 104, the navigation signals of which do not reach the detection device 50, for example, because the Earth is interposed between these satellites and the detection device 50. In general, the state (visible or invisible) of any satellite changes with time and so, for the purposes of the present description, except where specified otherwise, it is assumed to consider a generic instant in time tg, in which satellites 102 are actually visible and satellites 104 are not visible.

As previously mentioned, a corresponding code is associated with each satellite, whether it is visible or not. The codes associated with the satellites are of a type in itself known and belong to a same family of pseudo-random codes, such as the family of so-called Gold codes for example. Therefore, all the codes have a same time duration are formed by a same number of chips.

For completeness, it is also assumed that, independently of the fact of being visible or not, the satellites operate in a given band, such as the so-called L1 band of the GPS system for example.

That having been said, the local generator 64 selects an analysis code PRNx, which is referred to hereinafter as the detection code PRNx.

In particular, the detection code PRNx can belong, for example, to the above-mentioned family of pseudo-random codes. Alternatively, the detection code can be any sequence formed by any number of bits/chips. Therefore, use of the term "code" within the expression "detection code" does not imply that the detection code PRNx is necessarily a pseudo-random code.

With regard to the processing unit 54, this determines, in a manner that is in itself known, a so-called correlation function, on the basis of the N correlation signals $s_{d,z}(w)$.

In detail, the processing unit 54 determines the correlation function with a frequency equal to $f_s/(p*L)$, i.e. it updates the correlation function at each detection period $T_r = p*T$, where $T=L/f_s$ is the so-called integration period, namely the period of time employed by any accumulator 28 to provide a new sample of the corresponding correlation signal $s_{d,z}(w)$, while p is an integer number greater than or equal to one; in the case where p=1, the detection period $T_r$ coincides with the integration period T. In practice, the detection period $T_r$ is equal to the sum of p integration periods T.

In particular, for each detection period $T_r$, the processing unit 54 computes a corresponding data vector, formed by N elements, each of which corresponds to a respective correlation branch 24. More in particular, considering a detection period $T_r$ and considering any one element of the N elements of the corresponding data vector, this element corresponding to a given correlation branch and therefore to a given correlation signal $s_{d,z}(w)$, the considered element contains a value equal to the sum of the real parts of the p samples of the given correlation signal $s_{d,z}(w)$ generated during the p integration periods T that form the detection period $T_r$ considered. For each detection period $T_r$, the corresponding data vector defines N points of the corresponding correlation function.

An example of a correlation function is shown in Figure 4; this example refers to the receiver 1 shown in Figure 1, in the case where the analysis code PRNa generated by the digitally controlled oscillator 34 is equal to the above-mentioned first code PRN1 and the local signal $s_l(n)$ is locked to the carrier of the first navigation signal. Furthermore, the example shown refers to a given detection period $T_r$. Lastly, the abscissae shown in Figure 4 identify the outputs of the corresponding accumulators 28 and are such that the null index identifies the accumulator connected to the correlation multiplier that receives the time reference $cr_0(n)$ at input.

The processing unit 54 then executes a parametric spectral estimation algorithm, which computes an estimate of the covariance matrix of the correlation function, which is referred to hereinafter as the estimated covariance matrix. In other words, the estimated covariance matrix represents an estimate of the covariance matrix of the N correlation signals $s_{d,z}(w)$ and, more precisely, of the samples of the correlation signals $s_{d,z}(w)$.

In particular, considering any one detection period $T_r$, the processing unit 54 computes a corresponding estimated covariance matrix. To this end, the processing unit 54 computes, for example, the product of the data vector relating to the detection period considered by a vector equal to the transposition of the same data vector, thereby obtaining the estimated covariance matrix.

It is also possible that, for each detection period $T_r$, the processing unit 54 computes the corresponding estimated covariance matrix based on, as well as the data vector relating to the detection period considered, also one or more data vectors relating to detection periods preceding the detection period considered. For example, the processing unit 54 can compute the estimated covariance matrix as the sum of the matrices obtained by multiplying each one of the data vectors considered by the corresponding transposed vector and dividing the result of the sum by the number of addends.

Independently of the details concerning the determination of the estimated covariance matrix, the processing unit 54 computes the eigenvalues of the estimated covariance matrix and orders the thus computed eigenvalues so that the corresponding moduli are in decreasing order. That having been said, it is possible to demonstrate that the vector space relating to the eigenvectors of the estimated covariance matrix can be partitioned in a noise subspace, relating to the navigation signal and thermal noise, and in an interference subspace, relating to possible sinusoidal type interfering signals received by the antenna 2, and therefore contained within the input signal $s_i(t)$. Thus, in the case where a single sinusoidal type interfering signal is effectively present, it is found that, after having ordered the eigenvalues in a decreasing moduli order, the two eigenvalues of maximum modulus refer to the interference subspace, while the other eigenvalues refer to the noise subspace. More in general, in the case where a number I of sinusoidal type interfering signals is present, the 2*I eigenvalues of maximum modulus refer to the interference subspace; in particular, the first two eigenvalues of maximum modulus refer to the interfering signal having the greatest power, the second two eigenvalues of maximum modulus refer to the interfering signal having the second greatest power among the interfering signals, and so on. Hereinafter, for simplicity of description, it is assumed that a single interfering signal is present; furthermore, it is understood that the interfering signal is of the sinusoidal type.

The processing unit 54 is able to detect the presence of the interfering signal on the basis of the eigenvalues, as described hereinafter.

Before describing the operation of the processing unit 54 any further, it should be underlined that, unlike that shown in Figure 4, where the correlation function has a pronounced peak, as the analysis code PRNa is equal to first code PRN1 and the local signal $s_l(n)$ is locked to the carrier of the first navigation signal, the correlation function determined by the processing unit 54 does not have any pronounced peak, where pronounced is intended as a peak having a value above a given threshold, which can, for example, be set according to a specific implementation of the detection device 50. In fact, as previously mentioned and as described in greater detail hereinafter, the local frequency $f_{sweep}$ of the local signal $s_l(n)$ is varied over time in a manner independent of the input signal $s_i(t)$, i.e. in a manner such that the local frequency $f_{sweep}$ does not stably lock onto the frequency of any carrier that might be present on the input of the detection device 50.

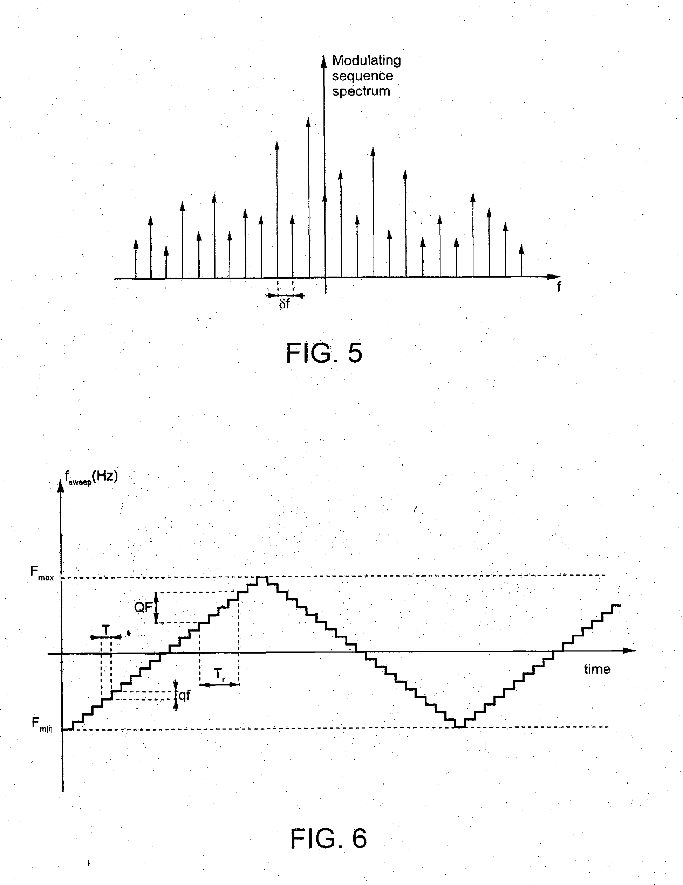

It should also be underlined that any PRN code has a line spectrum, of the type shown by way of example in Figure 5. More precisely, the spectrum shown in Figure 5 refers to a periodic modulation sequence obtained by periodically repeating a certain PRN code, the spacing $\delta f$ (in frequency) of the lines being a function of the period of repetition of the PRN code, and consequently of the duration of the PRN code. With reference, for example, to the receiver 1 shown in Figure 1 and assuming that the analysis code PRNa is equal to the first code PRN1, it is found that the impact of the interfering signal on the performance of the receiver 1 depends on the whether or not the spectrum line that corresponds to the interfering signal is superimposed on at least one line of the spectrum of the above-mentioned first periodic modulation sequence. More in particular, using the terms interfering line and code lines to indicate, respectively, i) the spectrum line of the interfering signal, as arranged in frequency after having been multiplied by the local signal $s_l(n)$ (i.e., downstream of the input multiplier 20), and ii) the lines of the spectrum of the first periodic modulation sequence, the wider the code line on which the interfering line is superimposed, the greater the effect of the interfering signal. For these reasons, in the case of a known type of receiver including a plurality of correlation channels (also known simply as channels), which typically operate using different analysis codes and therefore with different spectrums, it is found that the impact of the interfering signal differs according to the channel considered.

That having been said, it is demonstrated that the detection of the interfering signal by the processing unit 54 is possible if superimposition between the interfering line and a code line actually occurs, the latter referring to as the spectrum of the periodic modulation sequence relating to the detection code PRNx generated by the local generator 64.

In order to increase the probability that the interfering line is effectively superimposed on at least one code line, as well as, as previously mentioned, for preventing the formation of a correlation function peak, the variable frequency generator 52 varies the local frequency $f_{sweep}$ of local signal $s_l(n)$ during each detection period $T_r$.

In detail, during each detection period $T_r$, the local frequency $f_{sweep}$ is varied (continuously, or discretely) by a frequency QF at least equal to the spacing $\delta f$ between the code lines relating to the detection code PRNx, i.e. the lines of the spectrum of the periodic modulation sequence relating to the detection code PRNx. In this way, during each detection period, the interfering line is superimposed (at least temporarily) on at least one code line. Furthermore, assuming that the input signal $s_i(t)$ comprises a navigation signal containing a carrier at a given carrier frequency, which is substantially constant during a single detection period $T_r$, it is found that the local frequency $f_{sweep}$ cannot be equal to the given carrier frequency for the entire duration of the detection period $T_r$, i.e. the equivalence between the local frequency $f_{sweep}$ and the given carrier frequency is absent or, at the most, is temporary. In particular, by increasing the modulus of the time derivative of the local frequency $f_{sweep}$ during the detection period $T_r$, i.e. by increasing the speed of variation of the local frequency $f_{sweep}$, the time is reduced in which it is possible to have equivalence between the local frequency $f_{sweep}$ and the frequency of any carrier in input to the detection device 50. In this way, the impact that this (possible) equivalence has on the correlation function is significantly reduced, to the point of not permitting the formation of appreciable peaks in the correlation function.

Purely by way of example, the local frequency $f_{sweep}$ can be varied in the manner shown in Figure 6. In particular, the local frequency $f_{sweep}$ can be varied according to a triangular wave ranging between a minimum frequency $F_{min}$ and a maximum frequency $F_{max}$. Each period of the triangular wave comprises an ascending portion, in which the local frequency $f_{sweep}$ is increased, in a discrete manner, by a frequency qf at each integration period T, starting from the minimum frequency $F_{min}$ and until the maximum frequency $F_{max}$ is reached; therefore, within each integration period T, the local frequency $f_{sweep}$ is constant. Thus, the relation qf=QF/p applies, as well as T=$T_r$/p, as already explained hereinbefore. Similarly, during the descending portion of the period of the triangular wave, the local frequency $f_{sweep}$ is reduced, in a discrete manner, by frequency qf at each integration period T, starting from the maximum frequency $F_{max}$ and until the minimum frequency $F_{min}$ is reached again. In this way, the interfering line is made to superimpose on code lines belonging to different portions of the spectrum of the periodic modulation sequence relating to the detection code PRNx. Purely by way of example, p=4 in the example shown in Figure 6.

Always purely by way of example, embodiments are possible in which T=1ms, qf=50Hz, $T_r$=20ms and QF=1kHz, i.e. with p=20.

Preferably, the frequency QF is greater than the spacing δf, so as to also take into account the Doppler effect that can afflict navigation signals.

In order to reduce the possible formation of peaks in the correlation function even further, the local generator 64 can select the detection code PRNx, for example at generic instant tg, so that it is different from the code of any navigation signal received by the detection device 50 at generic instant tg. To this end, the detection device 50 can have a code detection stage 200 (shown in a dashed box in Figure 2), of a type in itself known, which detects, for each instant of time, the presence of navigation signals and the corresponding codes, which are referred to hereinafter as forbidden codes. The code detection stage 200 supplies the codes it detects to the local generator 64, so that the local generator 64 can select the detection code PRNx so that it differs from the forbidden codes.

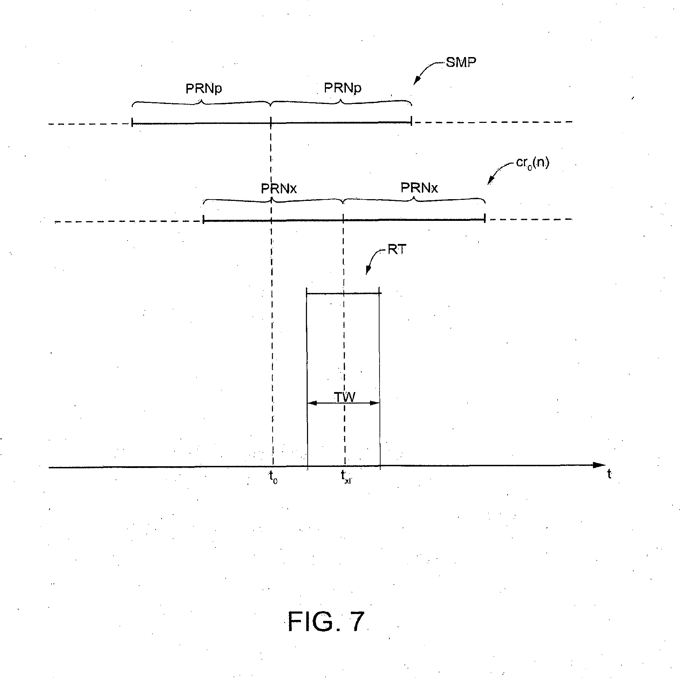

Alternatively, the local generator 64 can select the detection code PRNx so that it is equal to a forbidden code, in which case the local generator 64 sets the time window TW as shown in Figure 7.

In detail, using the term "received modulating sequence" (indicated by SMP) to indicate the modulating sequence relating to the forbidden code and received by the detection device 50, this sequence is uniquely defined by the forbidden code and by a start time to, which corresponds to the beginning of one of the infinite repetitions of the forbidden code (indicated by PRNp) that form the received modulating sequence SMP. This start time $t_0$ is determined by the code detection stage 200 in a manner that is in itself known.

It is also possible to define a time window, which is indicative of the temporal misalignment TW between the local periodical signal maximally in advance with respect to the time reference $cr_0(n)$ and the local periodical signal maximally delayed with respect to the time reference $cr_0(n)$; the relation TW=Δ*(N-1) is thus applicable.

In greater detail, the time window comprises an infinite number of time intervals, all having a length equal to the temporal misalignment TW and centred around corresponding centre times $t_{xi}$, each centre time being the start time of a corresponding repetition of the infinite repetitions of the detection code PRNx that form the time reference $cr_0(n)$. By way of example, Figure 7 shows, in a qualitative manner, one of these time intervals, indicated by RT.

That having been said, the local generator 64 sets the time window so that the start time $t_0$ does not fall within any of the time intervals that form the time window. In this way, even though the detection code PRNx is equal to a forbidden code, the locking of the tracking stage 6 is still prevented, and therefore the formation of peaks in the correlation function is prevented.

Independently of the details regarding the selection of the detection code PRNx, the variable frequency generator 52 defines, together with each correlation branch 24 and on the corresponding output of the local generator 64, an equivalent circuit formed by an equivalent digital filter, connected to an equivalent decimator. In particular, the spectrum of the transfer function of the equivalent digital filter is a line spectrum; furthermore, this spectrum frequency shifts as a function of the local frequency $f_{sweep}$.

Again, with reference to the operations carried out by the processing unit 54, this selects a metric, i.e. an indicator. For example, according to a first metric, the processing unit 54 sets the indicator equal to the eigenvalue of maximum modulus. According to a second metric, the indicator is set equal to the ratio between i) the average of the two eigenvalues of maximum modulus and ii) the eigenvalue of minimum modulus. According to a third metric, the indicator is set equal to the ratio between i) the average of the two eigenvalues of maximum modulus and ii) the eigenvalue relating to the noise subspace having maximum modulus, i.e. the eigenvalue having the third greatest modulus. According to a fourth metric, the indicator is set equal to the ratio between i) the sum of the moduli of the two eigenvalues of maximum modulus and ii) the sum of the moduli of the eigenvalues differing from the two eigenvalues of maximum modulus. Lastly, according to a fifth metric, the indicator is set equal to the ratio between i) a numerator, equal to the sum of the moduli of the two eigenvalues of maximum modulus, from which the moduli of the eigenvalues respectively having the third and fourth maximum modulus are subtracted, and ii) a denominator, equal to the sum of the moduli of the eigenvalues respectively having the third and fourth maximum modulus, from which the moduli of the eigenvalues respectively having the fifth and sixth maximum modulus are subtracted. It should be noted that the eigenvalues respectively having the third, fourth, fifth and sixth maximum modulus are nothing more than the eigenvalues relating to the noise subspace, respectively having the first, second, third and fourth modulus, ordered in decreasing size. It should also be noted that, by adopting the fifth metric, the indicator is indicative of a variation in slope between i) the pair of eigenvalues relating to the interference subspace and the first pair of eigenvalues relating to the noise subspace, and ii) the first and the second pair of eigenvalues relating to the noise subspace.

Independently of the metric adopted, the processing unit 54 compares the indicator with a threshold and, if the indicator exceeds the threshold, deduces the presence of the interfering signal.

In detail, the threshold is determined during a calibrating step of the detection device 50, which takes place in the absence of interfering signals and is formed by one or more detection periods $T_r$.

For example, the threshold can be determined empirically by the processing unit 54, requiring that the threshold be equal to a value such that the probability of false alarms is less than a certain percentage. In other words, the threshold is set in a way so that the eigenvalues calculated during the calibrating step are such that, during the same calibrating step, the presence of an interfering signal (in realty, not present) is detected for not more than a certain number of times, with respect to the total number of detection periods that form the calibrating step.

Alternatively, the processing unit 54 can determine the threshold theoretically, by calculating in a semi-analytical manner the probability of false alarm and the probability of failing to detect the interfering signal. For example, assuming, without any loss of generality, to adopt the above-mentioned first metric, the threshold can be determined as describe hereinafter.

In detail, it is possible to demonstrate that, in the absence of interfering signals, the modulus distribution of the eigenvalue of maximum modulus has a probability density with the form of a gamma distribution, which can be modelled as:

$$f_\gamma \left( x, k, \vartheta \right) = x^{k-1} \frac{e^{-x/\vartheta}}{\Gamma(k) \cdot \vartheta^k}$$

where $\Gamma(k)$ is equal to the so-called Gamma function $\left( \Gamma(k) = \int_0^{+\infty} t^{k-1} e^{-t} dt \right)$, x is the value taken by the modulus of the eigenvalue of maximum modulus, and k and $\theta$ are the so-called form and scale factors. Factors k and $\theta$ are determined by the processing unit 54 in a semi-analytical manner, on the basis of the average $\mu_{EV}^2$ and the variance $\sigma_{EV}^2$ of the distribution of the eigenvalues of maximum modulus, as determined by the processing unit 54 during the calibrating step, and in particular by setting $k = \mu_{EV}^2 / \sigma_{EV}^2$ and $\theta = \sigma_{EV}^2 / \mu_{EV}$.

It is further shown that a change occurs in the modulus distribution of the eigenvalue of maximum modulus depending on whether or not the interfering signal is present. In particular, the average of the modulus distribution of the eigenvalue of maximum modulus varies, depending on whether or not the interfering signal is present.

The processing unit 54, using the above-mentioned probability density $f_\gamma(x, k, \theta)$ relating to the case where no interfering signals are present, determines the value of the threshold. In particular, indicating the value of the threshold as x_th, x_th is determined such that the integral between x_th and infinity of the probability density $f_\gamma(x, k, \theta)$ is less than a probability of false alarm, set by the same processing unit 54.

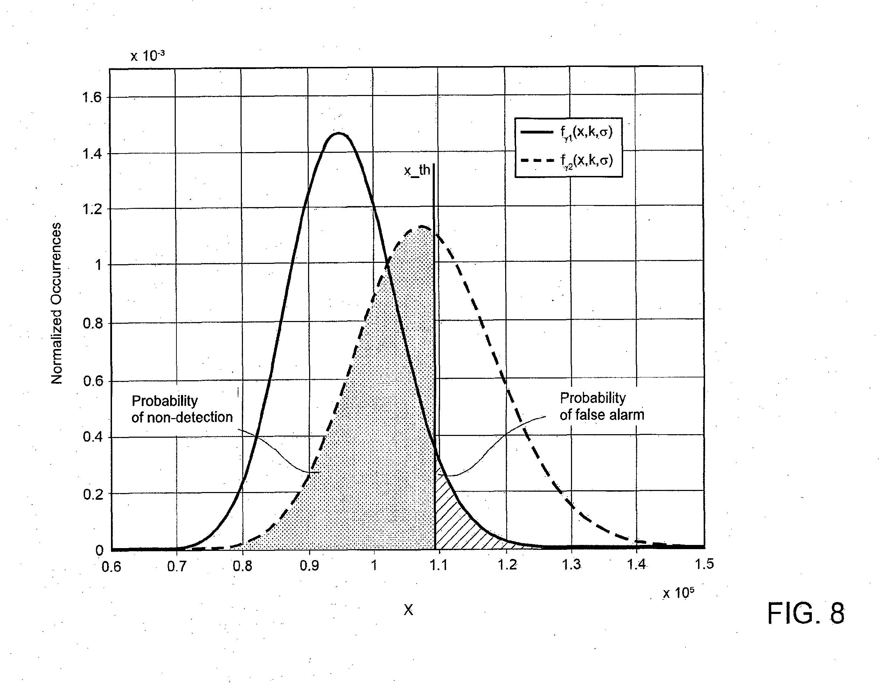

By way of example, Figure 8 shows the (normalized) trends of a first and a second probability density $f_{\gamma 1}(x, k, \theta)$ and $f_{\gamma 2}(x, k, \theta)$, respectively relating to the calibrating step (or, in any case, a step in which no interfering signal is present) and a step in which an interfering signal is present; the moduli of the eigenvalue of maximum modulus are indicated on the abscissa axis, while the corresponding occurrences are indicated on the ordinate axis. Figure 8 also shows the impact of the value x_th of the threshold on the probability of non-detection, which is equal to the integral between zero and x_th of the second probability density $f_{\gamma 2}(x, k, \theta)$.

Independently of how the processing unit 54 sets the threshold, performance in terms of capability to correctly detect the presence of the interfering signal further improves if the processing unit 54 generates a filtered indicator and discriminates between the presence and absence of the interfering signal by comparing the filtered indicator, instead of the indicator, with the threshold.

For example, the processing unit 54 can determine the filtered indicator by means of a moving averages operation. In this case, indicating the filtered indicator calculated by the processing unit 54 during a given detection period $T_r$ as $\Lambda_f(j-1)$ and indicating the indicator calculated in the following detection period $T_r$ (for example, by adopting the above-mentioned first metric) as $\Lambda(j)$, the filtered indicator $\Lambda_f(j)$ relating to this following detection period $T_r$ is set as follows:

$$\Lambda_f(j) = (M-1)/M * \Lambda_f(j-1) + 1/M * \Lambda(j)$$

where M is a weight set by the processing unit 54. In other words, the processing unit 54 subjects the indicators it calculates to filtering. In yet other words, the indicators determined by the processing unit 54 are subjected to digital filtering of the so-called IIR (infinite impulse response) type, which can be implemented, for example, via a Hatch filter. In this way, the probability of false alarm is reduced and, in addition, an average is taken of the contributions to the indicator caused by superimposition of the interfering line on code lines having different powers.

The advantages that can be achieved with the present detection device emerge clearly from the foregoing description. In particular, thanks to the open loop variation of the local frequency $f_{sweep}$, superimposition of the interfering line on at least one code line is guaranteed, with the consequent possibility of detecting the interfering signal. Furthermore, the open loop variation of the local frequency $f_{sweep}$ enables preventing, or at least reducing, the formation of peaks in the correlation function, even in the case where the detection code PRNx is equal to the code of the received navigation signal. In this way, the determination of the eigenvalues relating to the interference subspace is more accurate.

Furthermore, the tracking stage 6 of the detection device 50 defines a kind of dummy channel, on which the processing unit 54 performs the described analysis. In consequence, it is not necessary to repeat the analysis on multiple tracking stages, each relating to a corresponding code, as happens instead in the case of known interference detection methods, with a consequent reduction in computational load. In addition, since the local generator 64 and the variable frequency generator 52 operate in open loop mode, the detection of interfering signals can take place without the need for the tracking stage 6 to operate in tracking mode.

Finally, it is clear that modifications and variants can be made to the present detection device without departing from the scope of the present invention, as defined in the appended claims.

For example, the data vector, used to calculate the estimated covariance matrix, can also contain imaginary parts of the samples of the N correlation signals $s_{d,z}(w)$, in which case the calculation of the estimated covariance matrix entails the multiplication of the data vector by its complex conjugate transpose. Moreover, the correlation function can be normalized in a different manner from that described, i.e. the samples of the N correlation signals $s_{d,z}(w)$ can, for example, be multiplied by a same normalization constant.

It is also possible that, instead of the complex type multiplication signal $s_m(n)$, the tracking stage generates a first and a second multiplication subsignal, respectively containing the in-phase and in-quadrature components of the sampled signal $s_i(n)$. In this case, the tracking stage can comprise a first plurality of correlation branches, which operate on the first multiplication subsignal, and a second plurality of correlation branches, which operate on the second multiplication subsignal, in a manner which is in itself known. In addition, the correlation function can be calculated on the basis of the samples provided, for example, by just the first plurality of correlation branches.

Moreover, it is possible to define different metrics, for example, related to cases where there is more than one interfering signal.

## Claims

1. A device for detecting a sinusoidal type interfering signal, configured to receive an input signal ($s_i(t)$) and comprising:

   - an input stage (4) configured to sample the input signal, thereby generating a sampled signal ($s_i(n)$);
   - a local oscillator (52) configured to generate a local sinusoidal signal ($s_l(n)$) having a local frequency ($f_{sweep}$);
   - an input multiplier (20) configured to multiply the sampled signal by the local sinusoidal signal, thereby generating a multiplied signal ($s_m(n)$);
   - a local generator (64) configured to generate a plurality of local periodical signals ($cr_{-1}(n)$, $cr_0(n)$, $cr_1(n)$), each local periodical signal being formed by a periodical repetition of a same detection sequence (PRNx), the local periodical signals being time shifted with respect to each other;
   - a plurality of correlation branches (24), each correlation branch comprising a respective correlation multiplier (26) configured to multiply the multiplied signal ($s_m(n)$) by a corresponding local periodical signal, thereby generating a corresponding intermediate signal ($s_{c,-1}(n)$, $s_{c,0}(n)$, $s_{c,1}(n)$), and a respective accumulator (28) configured to generate, at each integration period ($T=L/f_s$), a sample of a corresponding correlation signal ($s_{d,-1}(w)$, $s_{d,0}(w)$, $s_{d,1}(w)$), said sample being a function of values taken by the corresponding intermediate signal during said integration period;

said detection device further comprising:

- correlating means (54) configured to determine a first value vector, based on samples of the correlation signals generated during a first detection period ($T_r$), which is formed by at least one integration period;
- first computing means (54) configured to compute, on the basis of the first value vector, a first estimated covariance matrix, equal to an estimate of the covariance matrix of the samples of the correlation signals;
- second computing means (54) configured to compute at least one eigenvalue of the first estimated covariance matrix;
- third computing means (54) configured to determine a first indicator, based on said at least one eigenvalue of the first estimated covariance matrix;
- comparing means (54) configured to compare the first indicator with a threshold and to detect the presence of the interfering signal based on the outcome of the comparison;

and wherein the local oscillator is configured to vary the local frequency during the first detection period, independently of the input signal.

2. The detection device according to claim 1, wherein the local periodical signals ($cr_{-1}(n)$, $cr_0(n)$, $cr_1(n)$) have a line frequency spectrum, the lines being equally spaced by a spacing frequency ($\delta f$); and wherein the local oscillator (52) is configured to vary, during the first detection period ($T_r$), the local frequency ($f_{sweep}$) by a frequency (QF) at least equal to the spacing frequency.

3. The detection device according to claim 1 or 2, wherein said correlating means (54) are configured so that the first value vector comprises a number of values equal to the number of correlation branches (24), each value of the first vector being a function of the sum of the samples of the corresponding correlation signal ($s_{d,-1}(w)$ $s_{d,0}(w)$, $s_{d,1}(w)$) generated during the first detection period ($T_r$).

4. The detection device according to any of the preceding claims, wherein said correlating means (54) are further configured to generate, for each detection period ($T_r$) following the first detection period, a corresponding following value vector, based on the samples of the correlation signals ($s_{d,-1}(w)$, $s_{d,0}(w)$, $s_{d,1}(w)$) generated during said following detection period; and wherein the first computing means (54) are further configured to compute, for each detection period following the first detection period, a corresponding following estimated covariance matrix, based on said following value vector; and wherein the second computing means (54) are further configured to compute, for each following estimated covariance matrix, at least one eigenvalue of said following estimated covariance matrix; and wherein the third computing means (54) are further configured to determine, for each following estimated covariance matrix, a corresponding following indicator, based on said at least one eigenvalue of said following estimated covariance matrix, the comparing means (54) being further configured to compare each following indicator with said threshold.

5. The detection device according to claim 4, wherein the second computing means (54) are configured to compute, for each estimated covariance matrix, the eigenvalue of maximum modulus; and wherein the third computing means (54) are further configured so that, for each estimated covariance matrix, the corresponding indicator is proportional to the corresponding eigenvalue of maximum modulus.

6. The detection device according to claim 4 or 5, wherein the third computing means (54) are further configured to determine, for each detection period ($T_r$), a preliminary parameter, based on the at least one eigenvalue of the corresponding estimated covariance matrix computed by the second computing means (54), the corresponding indicator being a function of said preliminary parameter and of the indicator relating to the previous detection period.

7. The detection device according to any of claims 4 to 6, wherein said local oscillator (52) is configured to vary the local frequency ($f_{sweep}$) in the course of time, between a minimum frequency ($F_{min}$) and a maximum frequency ($F_{max}$), according to a waveform including an ascending portion and a descending portion, each of said ascending portion and said descending portion extending over more than one detection period ($T_r$).

8. The detection device according to any of claims 4 to 7, wherein the processing unit (54) further comprises calibrating means (54) configured to determine said threshold during a calibrating step, formed by a number of detection periods

($T_r$) and during which the interfering signals are absent.

9. The detection device according to claim 8, wherein said calibrating means (54) are configured to determine said threshold as a function of the eigenvalues computed by the second computing means (54) during the calibrating step and so that, during the calibrating step, the comparing means (54) detect the presence of an interfering signal for a number of times such that the ratio between said number of times and the number of detection periods ($T_r$) that form the calibrating step is lower than a limit percentage.

10. The detection device according to any of the preceding claims, further comprising a code detection system (200) configured to determine the presence of sinusoidal carriers within the input signal ($s_i(t)$) and to detect pseudo-random codes that modulate said sinusoidal carriers, the local generator (64) being configured to set the detection sequence (PRNx) so that it is different from the pseudo-random codes detected by the code detection system.

11. An electronic receiver for a navigation satellite system, comprising the detection device according to any of the preceding claims.

12. A method for detecting a sinusoidal type interfering signal, comprising the steps of:

- sampling an input signal, thereby generating a sampled signal ($s_i(n)$);
- generating a local sinusoidal signal ($s_l(n)$) having a local frequency ($f_{sweep}$);
- multiplying the sampled signal by the local sinusoidal signal, thereby generating a multiplied signal ($s_m(n)$);
- generating a plurality of local periodical signals ($cr_{-1}(n)$, $cr_0(n)$, $cr_1(n)$), each local periodical signal being formed by a periodical repetition of a same detection sequence (PRNx), the local periodical signals being time shifted with respect to each other;
- multiplying each local periodical signal by the multiplied signal ($s_m(n)$), thereby generating a corresponding intermediate signal ($s_{c,-1}(n)$, $s_{c,0}(n)$, $s_{c,1}(n)$);
- for each intermediate signal, generating, at each integration period ($T=L/f_s$), a sample of a corresponding correlation signal ($s_{d,-1}(w)$, $s_{d,0}(w)$, $s_{d,1}(w)$), as a function of values taken by said intermediate signal during said integration period;
- determining a first value vector, based on samples of the correlation signals generated during a first detection period ($T_r$), which is formed by at least one integration period;
- computing, based on the first value vector, a first estimated covariance matrix, equal to an estimate of the covariance matrix of the samples of the correlation signals;
- computing at least one eigenvalue of the first estimated covariance matrix;
- determining a first indicator, based on said at least one eigenvalue of the first estimated covariance matrix; and
- comparing the first indicator with a threshold and detecting the presence of the interfering signal based on the outcome of the comparison;
said detection method further comprising the step of varying the local frequency during the detection period, independently of the input signal.

13. The detection method according to claim 12, wherein the local periodical signals ($cr_{-1}(n)$, $cr_0(n)$, $cr_1(n)$) have a line frequency spectrum, the lines being equally spaced by a spacing frequency ($\delta f$), and wherein said step of varying the local frequency ($f_{sweep}$) comprises varying, during the first detection period ($T_r$), the local frequency ($f_{sweep}$) by a frequency (QF) at least equal to the spacing frequency.

14. The detection method according to claim 12 or 13, wherein said step of determining a first value vector comprises determining a number of values equal to the number of correlation signals ($s_{d,-1}(w)$, $s_{d,0}(w)$, $s_{d,1}(w)$), each of said values being a function of the sum of the samples of the corresponding correlation signal generated during the first detection period ($T_r$).

15. The detection method according to any of claims 12 to 14, further comprising the step of generating, for each detection period ($T_r$) following the first detection period, a corresponding following value vector, based on the samples of the correlation signals ($s_{d,-1}(w)$, $s_{d,0}(w)$, $s_{d,1}(w)$) generated during said following detection period; said detection method further comprising, for each detection period following the first detection period, the steps of:

- computing a corresponding following estimated covariance matrix, based on the corresponding following value vector;
- computing at least one eigenvalue of said following estimated covariance matrix;

- determining a corresponding following indicator, based on said at least one eigenvalue of said following estimated covariance matrix; and
- comparing said following indicator with said threshold.

16. The detection method according to claim 15, wherein said step of computing at least one eigenvalue comprises computing, for each estimated covariance matrix, the eigenvalue of maximum modulus, the corresponding indicator being proportional to said eigenvalue of maximum modulus.

17. The detection method according to claim 15 or 16, further comprising the step of determining, for each detection period ($T_r$), a preliminary parameter, based on the at least one eigenvalue of the corresponding estimated covariance matrix; and wherein said step of determining a corresponding following indicator comprises determining said corresponding following indicator so that it is a function of the corresponding preliminary parameter and of the indicator relating to the previous detection period.

18. The detection method according to any of claims 15 to 17, further comprising the step of varying the local frequency ($f_{sweep}$) in the course of time, between a minimum frequency ($F_{min}$) and a maximum frequency ($F_{max}$), according to a waveform including an ascending portion and a descending portion, each of said ascending portion and said descending portion extending over more than one detection period ($T_r$).

19. The detection method according to any of claims 12 to 18, further comprising the steps of:

- determining the presence of sinusoidal carriers within the input signal ($s_i(t)$);
- detecting pseudo-random codes that modulate said sinusoidal carriers; and
- setting the detection sequence (PRNx) so that it is different from the detected pseudo-random codes.

**Patentansprüche**

1. Vorrichtung zum Detektieren eines Störsignals vom Sinustyp, die konfiguriert ist, ein Eingangssignal ($s_i(t)$) zu empfangen, und die umfasst:

- eine Eingangsstufe (4), die konfiguriert ist, das Eingangssignal abzutasten, wodurch ein abgetastetes Signal ($s_i(n)$) erzeugt wird;
- einen Lokaloszillator (52), der konfiguriert ist, ein lokales Sinussignal ($s_i(n)$) mit einer lokalen Frequenz ($f_{sweep}$) zu erzeugen;
- einen Eingangsmultiplizierer (20), der konfiguriert ist, das abgetastete Signal mit dem lokalen Sinussignal zu multiplizieren, wodurch ein multipliziertes Signal ($s_m(n)$) erzeugt wird;
- einen lokalen Generator (64), der konfiguriert ist, mehrere lokale periodische Signale ($cr_{-1}(n)$, $cr_0(n)$, $cr_1(n)$) zu erzeugen, wobei jedes lokale periodische Signal durch eine periodische Wiederholung derselben Detektionsfolge ($PRN_x$) gebildet ist, wobei die lokalen periodischen Signale in Bezug aufeinander zeitverschoben sind;
- mehrere Korrelationszweige (24), wobei jeder Korrelationszweig einen jeweiligen Korrelationsmultiplizierer (26), der konfiguriert ist, das multiplizierte Signal ($s_m(n)$) mit einem entsprechenden lokalen periodischen Signal zu multiplizieren, wodurch ein entsprechendes Zwischensignal ($s_{c,-1}(n)$, $s_{c,0}(n)$, $s_{c,1}(n)$) erzeugt wird, und einen jeweiligen Akkumulator (28), der konfiguriert ist, bei jeder Integrationsperiode ($T=L/f_s$) eine Abtastung eines entsprechenden Korrelationssignals ($s_{d,-1}(w)$, $s_{d,0}(w)$, $s_{d,1}(w)$) zu erzeugen, wobei die Abtastung eine Funktion von Werten ist, die durch das entsprechende Zwischensignal während der Integrationsperiode genommen wurden, umfasst;
wobei die Detektionsvorrichtung ferner umfasst:
- Korrelationsmittel (54), die konfiguriert sind, aufgrund von Abtastungen der während einer ersten Detektionsperiode ($T_r$), die durch mindestens eine Integrationsperiode gebildet wird, erzeugten Korrelationssignale einen ersten Wertvektor zu bestimmen;
- erste Berechnungsmittel (54), die konfiguriert sind, aufgrund des ersten Wertvektors eine erste geschätzte Kovarianzmatrix zu berechnen, die gleich einer Schätzung der Kovarianzmatrix der Abtastungen der Korrelationssignale ist;
- zweite Berechnungsmittel (54), die konfiguriert sind, zumindest einen Eigenwert der ersten geschätzten Kovarianzmatrix zu berechnen;
- dritte Berechnungsmittel (54), die konfiguriert sind, aufgrund des mindestens einen Eigenwerts der ersten geschätzten Kovarianzmatrix einen ersten Indikator zu berechnen;

- Vergleichsmittel (54), die konfiguriert sind, den ersten Indikator mit einem Schwellenwert zu vergleichen und die Anwesenheit des Störsignal aufgrund des Ergebnisses des Vergleichs zu detektieren;
und wobei der Lokaloszillator konfiguriert ist, die lokale Frequenz während der ersten Detektionsperiode unabhängig von dem Eingangssignal zu variieren.

2. Detektionsvorrichtung nach Anspruch 1, wobei die lokalen periodischen Signale ($cr_{-1}(n)$, $cr_0(n)$, $cr_1(n)$) ein Linienfrequenzspektrum besitzen, wobei die Linien um eine Abstandsfrequenz ($\delta f$) gleichmäßig beabstandet sind; und wobei der Lokaloszillator (52) konfiguriert ist, während der ersten Detektionsperiode ($T_r$) die lokale Frequenz ($f_{sweep}$) um eine Frequenz (QF), die mindestens gleich der Abstandsfrequenz ist, zu variieren.

3. Detektionsvorrichtung nach Anspruch 1 oder 2, wobei die Korrelationsmittel (54) so konfiguriert sind, dass der erste Wertvektor eine Anzahl von Werten umfasst, die gleich der Anzahl von Korrelationszweigen (24) ist, wobei jeder Wert des ersten Vektors eine Funktion der Summe der Abtastungen des entsprechenden Korrelationssignals ($s_{d,-1}(w)$, $s_{d,0}(w)$, $S_{d,1}(w)$) ist, das während der ersten Detektionsperiode ($T_r$) erzeugt wurde.

4. Detektionsvorrichtung nach einem der vorhergehenden Ansprüche, wobei die Korrelationsmittel (54) ferner konfiguriert sind, für jede Detektionsperiode ($T_r$), die auf die erste Detektionsperiode folgt, aufgrund der Abtastungen der Korrelationssignale ($s_{d,-1}(w)$, $s_{d,0}(w)$, $s_{d,1}(w)$), die während der folgenden Detektionsperiode erzeugt wurden, einen entsprechenden folgenden Wertvektor zu erzeugen; und wobei die ersten Berechnungsmittel (54) ferner konfiguriert sind, für jede Detektionsperiode, die auf die erste Detektionsperiode folgt, aufgrund des folgenden Wertvektors eine entsprechende folgende geschätzte Kovarianzmatrix zu berechnen; und wobei die zweiten Berechnungsmittel (54) ferner konfiguriert sind, für jede folgende geschätzte Kovarianzmatrix mindestens einen Eigenwert der folgenden geschätzten Kovarianzmatrix zu berechnen; und wobei die dritten Berechnungsmittel (54) ferner konfiguriert sind, für jede folgende geschätzte Kovarianzmatrix aufgrund des mindestens einen Eigenwerts der folgenden geschätzten Kovarianzmatrix einen entsprechenden folgenden Indikator zu berechnen, wobei die Vergleichsmittel (54) ferner konfiguriert sind, jeden folgenden Indikator mit dem Schwellenwert zu vergleichen.

5. Detektionsvorrichtung nach Anspruch 4, wobei die zweiten Berechnungsmittel (54) konfiguriert sind, für jede geschätzte Kovarianzmatrix den Eigenwert des maximalen Moduls zu berechnen; und wobei die dritten Berechnungsmittel (54) ferner so konfiguriert sind, dass für jede geschätzte Kovarianzmatrix der entsprechende Indikator proportional zu dem entsprechenden Eigenwert des maximalen Moduls ist.

6. Detektionsvorrichtung nach Anspruch 4 oder 5, wobei die dritten Berechnungsmittel (54) ferner konfiguriert sind, für jede Detektionsperiode ($T_r$) aufgrund des mindestens einen Eigenwerts der entsprechenden geschätzten Kovarianzmatrix einen vorläufigen Parameter zu bestimmen, der durch die zweiten Berechnungsmittel (54) berechnet wurde, wobei der entsprechende Indikator eine Funktion des vorläufigen Parameters und des Indikators, der sich auf die vorherige Detektionsperiode bezieht, ist.

7. Detektionsvorrichtung nach einem der Ansprüche 4 bis 6, wobei der Lokaloszillator (52) konfiguriert ist, die lokale Frequenz ($f_{sweep}$) im Lauf der Zeit zwischen einer minimalen Frequenz ($F_{min}$) und eine maximalen Frequenz ($F_{max}$) gemäß einer Wellenform, die einen ansteigenden Abschnitt und einen abfallenden Abschnitt enthält, wobei sich jeder des ansteigenden Abschnitts und des abfallenden Abschnitts über mehr als eine Detektionsperiode ($T_r$) erstreckt, zu variieren.

8. Detektionsvorrichtung nach einem der Ansprüche 4 bis 7, wobei die Verarbeitungseinheit (54) ferner Kalibriermittel (54) umfasst, die konfiguriert sind, den Schwellenwert während eines Kalibrierschrittes zu bestimmen, der durch eine Anzahl von Detektionsperioden ($T_r$) gebildet wird und während dem die Störsignale nicht vorhanden sind.

9. Detektionsvorrichtung nach Anspruch 8, wobei die Kalibriermittel (54) konfiguriert sind, den Schwellenwert als eine Funktion der durch die zweiten Berechnungsmittel (54) während des Kalibrierschrittes berechneten Eigenwerte und derart zu bestimmen, dass während des Kalibrierschrittes die Vergleichsmittel (54) die Anwesenheit eines Störsignals für eine Anzahl detektieren, so dass das Verhältnis zwischen der Anzahl und der Anzahl der Detektionsperioden ($T_r$), die den Kalibrierschritt bilden, kleiner als ein Grenzprozentanteil ist.

10. Detektionsvorrichtung nach einem der vorhergehenden Ansprüche, die ferner ein Codedetektionssystem (200) umfasst, das konfiguriert ist, die Anwesenheit von Sinusträgern innerhalb des Eingangssignals ($s_i(t)$) zu bestimmen und pseudo-zufällige Codes zu detektieren, die die Sinusträger modulieren, wobei der lokale Generator (64) konfiguriert ist, die Detektionsfolge ($PRN_x$) so einzustellen, dass sie von den durch das Codedetektionssystem detektierten pseudo-zufälligen Codes verschieden ist.

11. Elektronischer Empfänger für ein Navigationssatellitensystem, das die Detektionsvorrichtung nach einem der vorhergehenden Ansprüche umfasst.

12. Verfahren zum Detektieren eines Störsignals von Sinustyp, das die Schritte umfasst:

- Abtasten eines Eingangssignals, wodurch ein abgetastetes Signal ($s_i(n)$) erzeugt wird;
- Erzeugen eines lokalen Sinussignals ($s_1(n)$) mit einer lokalen Frequenz ($f_{sweep}$);
- Multiplizieren des abgetasteten Signals mit dem lokalen Sinussignal, wodurch ein multipliziertes Signal ($s_m(n)$) erzeugt wird;
- Erzeugen von mehreren lokalen periodischen Signalen ($cr_{-1}(n)$, $cr_0(n)$, $cr_1(n)$), wobei jedes lokale periodische Signal durch eine periodische Wiederholung einer selben Detektionsfolge ($PRN_x$) gebildet wird, wobei die lokalen periodischen Signale in Bezug aufeinander zeitverschoben sind;
- Multiplizieren eines jeden lokalen periodischen Signals mit dem multiplizierten Signal ($s_m(n)$), wodurch ein entsprechendes Zwischensignal ($s_{c,-1}(n)$, $s_{c,0}(n)$, $s_{c,1}(n)$) erzeugt wird;
- für jedes Zwischensignal Erzeugen bei jeder Integrationsperiode ($T=L/f_s$) einer Abtastung eines entsprechenden Korrelationssignals ($s_{d,-1}(w)$, $s_{d,0}(w)$, $s_{d,1}(w)$) als eine Funktion von Werten, die durch das Zwischensignal während der Integrationsperiode genommen wurden;
- Bestimmen eines ersten Wertvektors aufgrund von Abtastungen der während einer ersten Detektionsperiode ($T_r$), die durch mindestens eine Integrationsperiode gebildet wird, erzeugten Korrelationssignale;
- Berechnen aufgrund des ersten Wertvektors einer ersten geschätzten Kovarianzmatrix, die gleich einer Schätzung der Kovarianzmatrix der Abtastungen der Korrelationssignale ist;
- Berechnen mindestens eines Eigenwerts der ersten geschätzten Kovarianzmatrix;
- Bestimmen eines ersten Indikators aufgrund des mindestens einen Eigenwerts der ersten geschätzten Kovarianzmatrix; und
- Vergleichen des ersten Indikators mit einem Schwellenwert und Detektieren der Anwesenheit des Störsignals aufgrund des Ergebnisses des Vergleichs;
wobei das Detektionsverfahren ferner den Schritt umfasst, die lokale Frequenz während der ersten Detektionsperiode unabhängig von dem Eingangssignal zu variieren.

13. Detektionsverfahren nach Anspruch 12, wobei die lokalen periodischen Signale ($cr_{-1}(n)$, $cr_0(n)$, $cr_1(n)$) ein Linienfrequenzspektrum besitzen, wobei die Linien um eine Abstandsfrequenz ($\delta f$) gleichmäßig beabstandet sind; und wobei der Schritt des Variierens der lokalen Frequenz ($\delta f$) umfasst, während der ersten Detektionsperiode ($T_r$) die lokale Frequenz ($f_{sweep}$) um eine Frequenz ($QF$), die mindestens gleich der Abstandsfrequenz ist, zu variieren.

14. Detektionsverfahren nach Anspruch 12 oder 13, wobei der Schritt des Bestimmens eines ersten Wertvektors umfasst, eine Anzahl von Werten zu bestimmen, die gleich der Anzahl von Korrelationssignalen ($s_{d,-1}(w)$, $s_{d,0}(w)$, $s_{d,1}(w)$) ist, wobei jeder der Werte eine Funktion der Summe der Abtastungen des entsprechenden Korrelationssignals ist, das während der ersten Detektionsperiode ($T_r$) erzeugt wurde.

15. Detektionsverfahren nach einem der Ansprüche 12 bis 14, das ferner den Schritt umfasst, für jede Detektionsperiode ($T_r$), die auf die erste Detektionsperiode folgt, aufgrund der Abtastungen der Korrelationssignale ($s_{d,-1}(w)$, $s_{d,0}(w)$, $s_{d,1}(w)$), die während der folgenden Detektionsperiode erzeugt wurden, einen entsprechenden folgenden Wertvektor zu erzeugen; und wobei das Detektionsverfahren ferner für jede Detektionsperiode, die auf die erste Detektionsperiode folgt, die Schritte umfasst:

- Berechnen einer entsprechenden folgenden geschätzten Kovarianzmatrix aufgrund des entsprechenden folgenden Wertvektors;
- Berechnen mindestens eines Eigenwerts der folgenden geschätzten Kovarianzmatrix;
- Bestimmen eines entsprechenden folgenden Indikators aufgrund des mindestens einen Eigenwerts der folgenden geschätzten Kovarianzmatrix; und
- Vergleichen des folgenden Indikators mit dem Schwellenwert.

16. Detektionsverfahren nach Anspruch 15, wobei der Schritt des Berechnens mindestens eines Eigenwertes umfasst, für jede geschätzte Kovarianzmatrix den Eigenwert des maximalen Moduls zu berechnen, wobei der entsprechende Indikator proportional zu dem Eigenwert des maximalen Moduls ist.

**17.** Detektionsverfahren nach Anspruch 15 oder 16, das ferner den Schritt umfasst, für jede Detektionsperiode ($T_r$) aufgrund des mindestens einen Eigenwerts der entsprechenden geschätzten Kovarianzmatrix einen vorläufigen Parameter zu bestimmen; und wobei der Schritt des Bestimmens eines entsprechenden folgenden Indikators umfasst, den entsprechenden folgenden Indikator so zu bestimmen, dass er eine Funktion des entsprechenden vorläufigen Parameters und des Indikators, der sich auf die vorherige Detektionsperiode bezieht, ist.

**18.** Detektionsverfahren nach einem der Ansprüche 15 bis 17, das ferner den Schritt umfasst, die lokale Frequenz ($f_{sweep}$) im Lauf der Zeit zwischen einer minimalen Frequenz ($F_{min}$) und eine maximalen Frequenz ($F_{max}$) gemäß einer Wellenform, die einen ansteigenden Abschnitt und einen abfallenden Abschnitt enthält, wobei sich jeder des ansteigenden Abschnitts und des abfallenden Abschnitts über mehr als eine Detektionsperiode ($T_r$) erstreckt, zu variieren.

**19.** Detektionsverfahren nach einem der Ansprüche 12 bis 18, das ferner die Schritte umfasst:

- Bestimmen der Anwesenheit von Sinusträgern innerhalb des Eingangssignals ($s_i(t)$);
- Detektieren von pseudo-zufälligen Codes, die die Sinusträger modulieren; und
- Einstellen der Detektionsfolge ($PRN_x$) derart, dass sie von den detektierten pseudo-zufälligen Codes verschieden ist.

**Revendications**

**1.** Dispositif de détection d'un signal d'interférence de type sinusoïdal, configuré pour recevoir un signal d'entrée ($s_i(t)$) et comprenant :

- un étage d'entrée (4) configuré pour échantillonner le signal d'entrée, générant ainsi un signal échantillonné ($s_i(n)$) ;
- un oscillateur local (52) configuré pour générer un signal sinusoïdal local ($s_i(n)$) ayant une fréquence locale ($f_{sweep}$) ;
- un multiplicateur d'entrée (20) configuré pour multiplier le signal échantillonné par le signal sinusoïdal local, générant ainsi un signal multiplié ($s_m(n)$) ;
- un générateur local (64) configuré pour générer une pluralité de signaux périodiques locaux ($cr_{-1}(n)$, $cr_0(n)$, $cr_1(n)$), chaque signal périodique local étant formé par une répétition périodique d'une même séquence de détection (PRNx), les signaux périodiques locaux étant décalés temporellement les uns par rapport aux autres ;
- une pluralité de branches de corrélation (24), chaque branche de corrélation comprenant un multiplicateur de corrélation respectif (26) configuré pour multiplier le signal multiplié ($s_m(n)$) par un signal périodique local correspondant, générant ainsi un signal intermédiaire correspondant ($s_{c,-1}(n)$, $s_{c,0}(n)$, $s_{c,1}(n)$) et un accumulateur respectif (28) configuré pour générer, à chaque période d'intégration ($T=L/f_s$), un échantillon d'un signal de corrélation correspondant ($s_{d,-1}(w)$, $s_{d,0}(w)$, $s_{d,1}(w)$), ledit échantillon étant une fonction de valeurs prises par le signal intermédiaire correspondant durant ladite période d'intégration ;
ledit dispositif de détection comprenant en outre :
- des moyens de corrélation (54) configurés pour déterminer un premier vecteur de valeurs, sur la base d'échantillons des signaux de corrélation générés durant une première période de détection ($T_r$), qui est formée par au moins une période d'intégration ;
- des premiers moyens de calcul (54) configurés pour calculer, sur la base du premier vecteur de valeurs, une première matrice de covariance estimée, égale à une estimation de la matrice de covariance des échantillons des signaux de corrélation ;
- des deuxièmes moyens de calcul (54) configurés pour calculer au moins une valeur propre de la première matrice de covariance estimée ;
- des troisièmes moyens de calcul (54) configurés pour déterminer un premier indicateur, sur la base de ladite au moins une valeur propre de la première matrice de covariance estimée ;
- des moyens de comparaison (54) configurés pour comparer le premier indicateur à un seuil et pour détecter la présence du signal d'interférence sur la base du résultat de la comparaison ;
et dans lequel l'oscillateur local est configuré pour faire varier la fréquence locale durant la première période de détection, indépendamment du signal d'entrée.

**2.** Dispositif de détection selon la revendication 1, dans lequel les signaux périodiques locaux ($cr_{-1}(n)$, $cr_0(n)$, $cr_1(n)$) ont un spectre de fréquences de raies, les raies étant espacées de manière égale d'une fréquence d'espacement (δf) ; et dans lequel l'oscillateur local (52) est configuré pour faire varier, durant la première période de détection (T$_r$), la fréquence locale (f$_{sweep}$) d'une fréquence (QF) au moins égale à la fréquence d'espacement.

3. Dispositif de détection selon la revendication 1 ou 2, dans lequel lesdits moyens de corrélation (54) sont configurés de sorte que le premier vecteur de valeurs comprenne un nombre de valeurs égal au nombre de branches de corrélation (24), chaque valeur du premier vecteur étant une fonction de la somme des échantillons du signal de corrélation correspondant (S$_{d,-1}$(w), s$_{d,0}$(w), s$_{d,1}$(w)) générés durant la première période de détection (T$_r$).

4. Dispositif de détection selon l'une quelconque des revendications précédentes, dans lequel lesdits moyens de corrélation (54) sont configurés en outre pour générer, pour chaque période de détection (T$_r$) suivant la première période de détection, un vecteur de valeurs suivant correspondant, sur la base des échantillons des signaux de corrélation (s$_{d,-1}$(w), s$_{d,0}$(w), s$_{d,1}$(w)) générés durant ladite période de détection suivante ; et dans lequel les premiers moyens de calcul (54) sont configurés en outre pour calculer, pour chaque période de détection suivant la première période de détection, une matrice de covariance estimée suivante correspondante, sur la base dudit vecteur de valeurs suivant ; et dans lequel les deuxièmes moyens de calcul (54) sont configurés en outre pour calculer, pour chaque matrice de covariance estimée suivante, au moins une valeur propre de ladite matrice de covariance estimée suivante ; et dans lequel les troisièmes moyens de calcul (54) sont configurés en outre pour déterminer, pour chaque matrice de covariance estimée suivante, un indicateur suivant correspondant, sur la base de ladite au moins une valeur propre de ladite matrice de covariance estimée suivante, les moyens de comparaison (54) étant configurés en outre pour comparer chaque indicateur suivant audit seuil.

5. Dispositif de détection selon la revendication 4, dans lequel lesdits deuxièmes moyens de calcul (54) sont configurés pour calculer, pour chaque matrice de covariance estimée, la valeur propre de module maximal ; et dans lequel les troisièmes moyens de calcul (54) sont configurés en outre de sorte que, pour chaque matrice de covariance estimée, l'indicateur correspondant soit proportionnel à la valeur propre correspondante de module maximal.

6. Dispositif de détection selon la revendication 4 ou 5, dans lequel les troisièmes moyens de calcul (54) sont configurés en outre pour déterminer, pour chaque période de détection (T$_r$), un paramètre préliminaire, sur la base de l'au moins une valeur propre de la matrice de covariance estimée correspondante calculée par les deuxièmes moyens de calcul (54), l'indicateur correspondant étant une fonction dudit paramètre préliminaire et de l'indicateur relatif à la période de détection précédente.

7. Dispositif de détection selon l'une quelconque des revendications 4 à 6, dans lequel ledit oscillateur local (52) est configuré pour faire varier la fréquence locale (f$_{sweep}$) au cours du temps, entre une fréquence minimale (f$_{min}$) et une fréquence maximale (F$_{max}$), en fonction d'une forme d'onde comprenant une portion ascendante et une portion descendante, chacune de ladite portion ascendante et de ladite portion descendante s'étendant sur plus d'une période de détection (T$_r$).

8. Dispositif de détection selon l'une quelconque des revendications 4 à 7, dans lequel l'unité de traitement (54) comprend en outre des moyens d'étalonnage (54) configurés pour déterminer ledit seuil durant une étape d'étalonnage, formée par un nombre de périodes de détection (T$_r$) et durant laquelle les signaux d'interférence sont absents.

9. Dispositif de détection selon la revendication 8, dans lequel lesdits moyens d'étalonnage (54) sont configurés pour déterminer ledit seuil comme une fonction des valeurs propres calculées par les deuxièmes moyens de calcul (54) durant l'étape d'étalonnage et de sorte que, durant l'étape d'étalonnage, les moyens de comparaison (54) détectent la présence d'un signal d'interférence pour un nombre de fois tel que le rapport entre ledit nombre de fois et le nombre de périodes de détection (T$_r$) qui forment l'étape d'étalonnage est inférieur à un pourcentage limite.

10. Dispositif de détection selon l'une quelconque des revendications précédentes, comprenant en outre un système de détection de codes (200) configuré pour déterminer la présence de porteuses sinusoïdales dans le signal d'entrée (s$_i$(t)) et pour détecter des codes pseudo-aléatoires qui modulent lesdites porteuses sinusoïdales, le générateur local (64) étant configuré pour établir la séquence de détection (PRNx) de sorte qu'elle soit différente des codes pseudo-aléatoires détectés par le système de détection de codes.

11. Récepteur électronique pour un système de navigation par satellite, comprenant le dispositif de détection selon l'une quelconque des revendications précédentes.

12. Procédé de détection d'un signal d'interférence de type sinusoïdal, comprenant les étapes suivantes :

- l'échantillonnage d'un signal d'entrée, générant ainsi un signal échantillonné ($s_i(n)$) ;
- la génération d'un signal sinusoïdal local ($s_i(n)$) ayant une fréquence locale ($f_{sweep}$) ;
- la multiplication du signal échantillonné par le signal sinusoïdal local, générant ainsi un signal multiplié ($s_m(n)$) ;
- la génération d'une pluralité de signaux périodiques locaux ($cr_{-1}(n)$, $cr_0(n)$, $cr_1(n)$), chaque signal périodique local étant formé par une répétition périodique d'une même séquence de détection (PRNx), les signaux périodiques locaux étant décalés temporellement les uns par rapport aux autres ;
- la multiplication de chaque signal périodique local par le signal multiplié ($s_m(n)$), générant ainsi un signal intermédiaire correspondant ($s_{c,-1}(n)$, $s_{c,0}(n)$, $s_{c,1}(n)$) ;
- pour chaque signal intermédiaire, la génération, à chaque période d'intégration ($T=L/f_s$), d'un échantillon d'un signal de corrélation correspondant ($s_{d,-1}(w)$, $s_{d,0}(w)$, $s_{d,1}(w)$), comme une fonction de valeurs prises par ledit signal intermédiaire durant ladite période d'intégration ;
- la détermination d'un premier vecteur de valeurs, sur la base d'échantillons des signaux de corrélation générés durant une première période de détection ($T_r$), qui est formée par au moins une période d'intégration ;
- le calcul, sur la base du premier vecteur de valeurs, d'une première matrice de covariance estimée, égale à une estimation de la matrice de covariance des échantillons des signaux de corrélation ;
- le calcul d'au moins une valeur propre de la première matrice de covariance estimée ;
- la détermination d'un premier indicateur, sur la base de ladite au moins une valeur propre de la première matrice de covariance estimée ; et
- la comparaison du premier indicateur à un seuil et la détection de la présence du signal d'interférence sur la base du résultat de la comparaison ;
ledit procédé de détection comprenant en outre l'étape de variation de la fréquence locale durant la période de détection, indépendamment du signal d'entrée.

**13.** Procédé de détection selon la revendication 12, dans lequel les signaux périodiques locaux ($cr_{-1}(n)$, $cr_0(n)$, $cr_1(n)$) ont un spectre de fréquences de raies, les raies étant espacées de manière égale d'une fréquence d'espacement ($\delta f$), et dans lequel ladite étape de variation de la fréquence locale ($f_{sweep}$) comprend la variation, durant la première période de détection ($T_r$), de la fréquence locale ($f_{sweep}$) d'une fréquence (QF) au moins égale à la fréquence d'espacement.

**14.** Procédé de détection selon la revendication 12 ou 13, dans lequel ladite étape de détermination du premier vecteur de valeurs comprend la détermination d'un nombre de valeurs égal au nombre de signaux de corrélation correspondant ($s_{d,-1}(w)$, $s_{d,0}(w)$, $s_{d,1}(w)$), chacune desdites valeurs étant une fonction de la somme des échantillons du signal de corrélation correspondant générés durant la première période de détection ($T_r$).

**15.** Procédé de détection selon l'une quelconque des revendications 12 à 14, comprenant en outre l'étape de génération, pour chaque période de détection ($T_r$) suivant la première période de détection, d'un vecteur de valeurs suivant correspondant, sur la base des échantillons des signaux de corrélation ($s_{d,-1}(w)$, $s_{d,0}(w)$, $s_{d,1}(w)$) générés durant ladite période de détection suivante ; ledit procédé de détection comprenant en outre, pour chaque période de détection suivant la première période de détection, les étapes suivantes :

- le calcul d'une matrice de covariance estimée suivante correspondante, sur la base du vecteur de valeurs suivant correspondant ;
- le calcul d'au moins une valeur propre de ladite matrice de covariance estimée suivante ;
- la détermination d'un indicateur suivant correspondant, sur la base de ladite au moins une valeur propre de ladite matrice de covariance estimée suivante ; et
- la comparaison dudit indicateur suivant audit seuil.

**16.** Procédé de détection selon la revendication 15, dans lequel ladite étape de calcul d'au moins une valeur propre comprend le calcul, pour chaque matrice de covariance estimée, de la valeur propre de module maximal, l'indicateur correspondant étant proportionnel à ladite valeur propre de module maximal.

**17.** Procédé de détection selon la revendication 15 ou 16, comprenant en outre l'étape de détermination, pour chaque période de détection ($T_r$), d'un paramètre préliminaire, sur la base de l'au moins une valeur propre de la matrice de covariance estimée correspondante ; et dans lequel ladite étape de détermination d'un indicateur suivant correspondant comprend la détermination dudit indicateur suivant correspondant de sorte qu'il soit une fonction du paramètre préliminaire correspondant et de l'indicateur relatif à la période de détection précédente.

**18.** Procédé de détection selon l'une quelconque des revendications 15 à 17, comprenant en outre l'étape de variation de la fréquence locale ($f_{sweep}$) au cours du temps, entre une fréquence minimale ($F_{min}$) et une fréquence maximale ($F_{max}$), en fonction d'une forme d'onde comprenant une portion ascendante et une portion descendante, chacune de ladite portion ascendante et de ladite portion descendante s'étendant sur plus d'une période de détection ($T_r$).

19. Procédé de détection selon l'une quelconque des revendications 12 à 18, comprenant en outre les étapes suivantes :

- la détermination de la présence de porteuses sinusoïdales dans le signal d'entrée ($s_i(t)$) ;
- la détection de codes pseudo-aléatoires qui modulent lesdites porteuses sinusoïdales ; et
- l'établissement de la séquence de détection (PRNx) de sorte qu'elle soit différente des codes pseudo-aléatoires détectés.

FIG. 1

FIG. 2

FIG. 3

FIG. 4

EP 2 662 706 B1

FIG. 5

FIG. 6

FIG. 7

FIG. 8

REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **C. MACABIAU et al.** Use of Multicorrelator Techniques for Interference Detection. *ION NTM 2001,* 22 January 2011